# EUROPEAN PATENT APPLICATION

(11) **EP 4 047 898 A1**
(43) Date of publication of application: **24.08.2022**
(21) Application number: 21157572.5
(22) Date of filing: 17.02.2021
(51) Int. Cl.: H04L 29/06, G05B 19/418, H04L 12/40, H04L 29/08

(54) **DEFENDING INDUSTRIAL AUTOMATION SYSTEMS AGAINST ATTACK**

(71) Applicant: ABB Schweiz AG, 5400 Baden (CH)
(72) Inventor: BRAUN, Roland, 53859 Niederkassel Lülsdorf (DE); KOHNHAEUSER, Florian, 64560 Riedstadt (DE); GRUENER, Sten, 68549 Ilvesheim (DE); SCHOCH, Nicolai, 69115 Heidelberg (DE); DIX, Marcel, 68167 Mannheim (DE)
(74) Representative: Maiwald Patent- und Rechtsanwaltsgesellschaft mbH

(57) **Abstract**

There is provided a computer-implemented method of defending a communications network (106) of an industrial automation system against attack by an attacker (104). The method comprises detecting (108) illicit communications sent from the attacker (104) to an automation device (100) connected to the communications network (106). The detecting is performed by illicit communication detection functionality (400) configured to detect the illicit communications using one or more predetermined rules defining illicit communications based on context awareness. The method further comprises, in response to detecting the illicit communications, implementing (110, 112) countermeasures to counter the attack.

## Description

### FIELD OF THE INVENTION

The invention relates to methods and devices for defending a communications network of an industrial automation system against attack by an attacker.

### BACKGROUND

With the use of industrial network protocols such as EtherNet/IP, ModbusIP, PROFINET, and Foundation Fieldbus H2 in industrial automation, automation devices are more exposed to security threats originating from the internet than ever before. Such protocols often run on protocol stacks which implement rules for processing communications between networked peers. The implemented rules validate incoming messages before the device application becomes involved. Currently, invalid messages are simply ignored or rejected.

### SUMMARY

There is therefore a need for more effective detection and/or handling of illicit communications in industrial automation settings. This need is met by the subject-matter of the independent claims. Optional features are set forth by the dependent claims.

### BRIEF DESCRIPTION OF THE DRAWINGS

A detailed description will now be given, by way of example only, with reference to the accompanying drawings, in which:-
Figure 1 illustrates the network defense concept according to the present disclosure;
Figure 2 illustrates one implementation using a system-controlled firewall;
Figure 3 illustrates one example of an information model including an extension related to the detection of illicit communications;
Figure 4 illustrates one implementation involving a device-embedded firewall;
Figure 5 illustrates one implementation involving a modular distributed firewall;
Figure 6 illustrates one implementation involving an OPC UA-aware firewall;
Figure 7 illustrates a computing device that can be used in accordance with the systems and methods disclosed herein.

### DETAILED DESCRIPTION

Proposed herein is illicit communication detection functionality configured to differentiate between regular communication anomalies and intentional transmission of invalid protocol messages. The illicit communication detection functionality can be implemented in any one or more of the protocol layers. In the application layer, for example, devices may be configured to detect and report communication anomalies, for example protocol messages referring to a network infrastructure component such as a switch or bridge which cannot be supported. Disclosed herein are automation devices comprising such illicit communication detection functionality configured to detect and report communication anomalies to entities in the network infrastructure that can at least semi-automatically handle the reported problem. In particular, a defender (which may also be referred to as a network defender) is provided which is configured to disconnect (or lock out) the source of the communication anomalies. In an interactive approach the defender may be configured to prompt a human user to take action by means of an HMI (comprising any suitable human-machine interface such as a monitor, speaker, light/LED, keyboard, or even printed paper).

Known approaches to handling invalid communication messages consider the messages as a temporary or isolated issue that may sufficiently be handled by ignoring or rejecting the messages. The potential in automation devices to detect and handle communication anomalies has not been leveraged to the full extent.

Some of the protocols used in industry automation envision the concept of diagnostics (alarms). Examples include Profinet, Profibus, OPC UA, to name just three. However, there has so far been no attempt to report detected communication anomalies using the protocol defined alarm messages.

OPC UA provides the automation industry with a network infrastructure for connecting the components of a distributed control system (DCS). Although OPC UA specifies a way of secure communication, there are still vulnerabilities especially to Denial-of-Service (DoS) attacks. The existing vulnerabilities and countermeasures are described in the standard. Although automation devices are able to detect illicit use of OPC UA Services and to implement countermeasures inside the firmware to mitigate DoS attacks, this does not prevent sustained attacks by an attacker. Such attacks slow down the device, draw computing power needed to run regular application tasks, and over time increase the likelihood of a successful attack.

OPC UA specifies how an OPC UA Server is able to send alarm notifications to an OPC UA Client that has subscribed to receive the related updates. Current switches or firewalls are not able to detect OPC UA-specific anomalies.

The subject-matter described herein may solve any one or more of the above-mentioned problems.

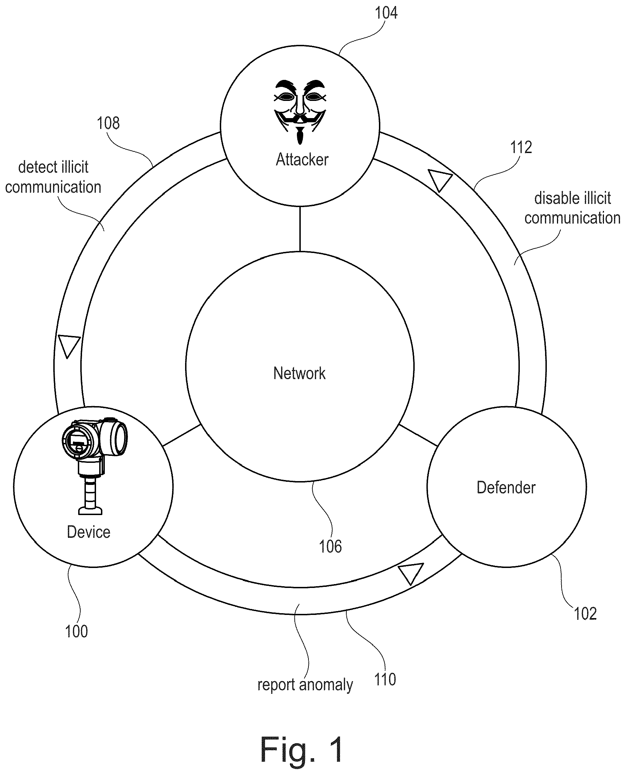

Figure 1 illustrates the network defense concept according to the present disclosure. The proposed solution envisions illicit communication detection functionality whereby an automation device 100 of an industrial automation system is configured to detect 108 and report 110 illicit communications sent from an attacker 104 to the device 100. The report is sent to a defender 102 that is in turn configured to eliminate or counter the threat, for example by disabling 112 the illicit communications originating from the attacker 104. The various entities 100, 102, 104 are connected together by a communications network 106 which operates according to an industrial network protocol.

In one example, the network 106 operates according to the PROFINET protocol. PROFINET defines an Alarm CR (Communication Relation) enabling the device 100 to notify an IO-Controller (not shown). The illicit communication detection functionality, which may be implemented via an (extended) protocol stack of the device 100, is configured to use the Alarm CR to report detected communication anomalies to the IO-Controller. The IO-Controller is configured to transform and forward the PROFINET encoded alarm message to the defender 102, which is configured to disable the illicit communication automatically or to prompt the user to take action.

A similar approach could be taken using PROFIBUS, where the device 100 operating as a PROFIBUS slave is configured to indicate diagnostics to a controller (not shown) operating as a PROFIBUS master. The communication anomaly detected by the illicit communication detection functionality, for example by extended functions of the protocol stack in the application firmware of the device 100, is configured to indicate diagnostics describing the communication anomaly. The controller, reading (pulling) the diagnostics details from the device 100, is configured to transform and forward the PROFIBUS encoded diagnostic message to the defender 102.

In further examples, such as those described in more detail below, the network 106 operates using the OPC UA protocol. The (OPC UA-aware) illicit communication detection functionality, along with a firewall, may sit between the device 100 and the network 106, outside a DMZ (demilitarized zone). The OPC UA-aware illicit communication detection functionality is configured to control the firewall with the aim of preventing illicit control attempts.

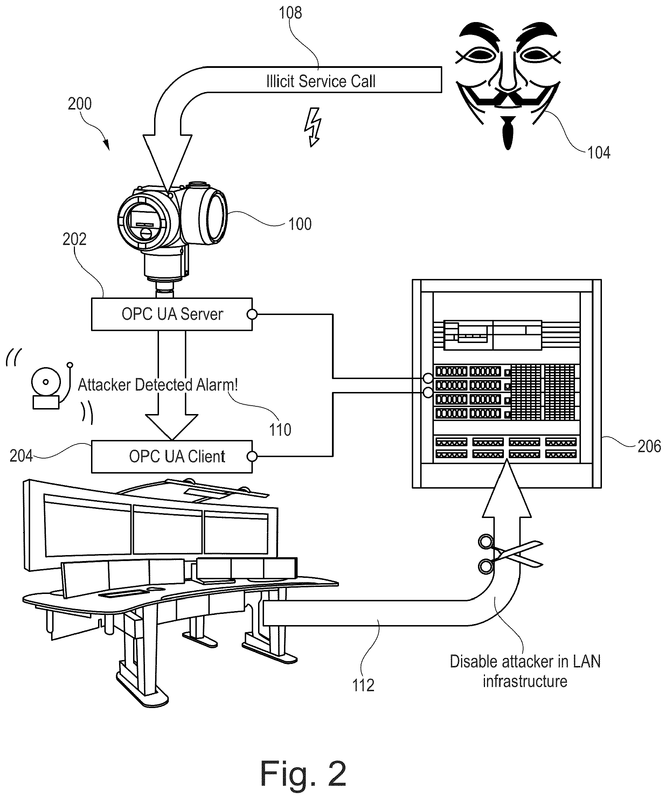

Figure 2 illustrates one such solution in a DCS 200 (distributed control system) using a system-controlled firewall. In the scenario shown in figure 2, the attacker 104 starts running illicit OPC UA service calls on the device 100, which are detected, as indicated at 108. As an example, the attacker 104 could continuously invoke the OPC UA specified service "FindServers". This is possible because the service "FindServers" runs outside a secured connection between an OPC UA client 204 of the DCS 200 and an OPC UA server 202 inside the device 100. The illicit communication detection functionality, that may for example be built into the firmware of the device 100, is configured to detect the high frequency of the repeated service call (at 108), and to report the attack (at 110). The attacker 104 may then be disabled (at 112) in the network (LAN) infrastructure 106. The OPC UA server 202 and the OPC UA client 204 both operate according to an information model describing acknowledgeable alarm conditions that can be used to report an attack.

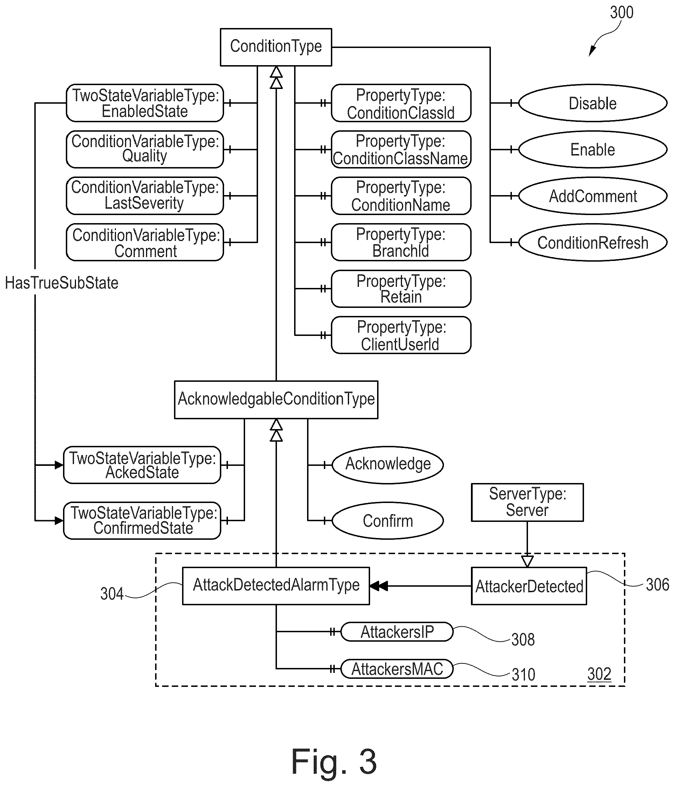

Figure 3 illustrates one example of such an information model 300, showing at 302 those parts related to the illicit communication detection functionality. Using the commonly defined "AttackDetectedAlarmType" 304, the device 100 is configured to call for help by publishing the alarm. Assuming the DCS 200, or some part of it such as the defender 102, is configured to control functions of the network infrastructure 106, the DCS 200 will implement countermeasures inside the network infrastructure 106 to disable further illicit access to the network. The effort required to realize such an implementation is low because the information model 300 adds just a few nodes 304-310 to the address space. The information model 300 may be compatible with devices 100 used in automation systems such as DI, PA-DIM, PLCOPEN, PACKML, for example. As shown in figure 3, when the protocol messages are encrypted, it may be more difficult for network infrastructure components to detect content-based communication anomalies such as invalid signatures. For protocols that convey the origin of a protocol message, it is, however, possible to trace the transmitter. For example, an IP-compliant message includes an IP address 308 and a MAC address 310, which can be used to identify the attacker 104.

Any appropriate logic or rule-based algorithm may be used by the illicit communication detection functionality to detect illicit communications. By "illicit" is meant that the communications are the result of an attack, to be distinguished from "regular" communication anomalies, which typically have a stochastic nature, for example those disturbances which appear because of temporary EMC related issues. Attacks typically come frequently and/or are systematic, for example messages always provided with an invalid checksum. Altough illicit communications may comprise isolated or individual messages, typically the invalid messages will be repeated as part of a sustained attack. The illicit communication detection functionality may thus be viewed as filter configured to separate valid from invalid (e.g. illicit) communications.

According to the present disclosure, the rules used to define illicit communications are defined and/or selected based on context awareness, meaning that knowledge of the context, or data characterizing the context, is used in the definition and/or selection of the rules. Data characterizing the context may be detected in situ by the illlicit communication detection functionality or may be input to the illlicit communication detection functionality prior to operation. The "context" may be viewed as any information that can be used to characterize the situation in which the device finds itself. Although other forms of context awareness are possible, the present disclosure envisages that context awareness comprises, for example, awareness of constraints imposed by an industrial network protocol used by the communications network and/or constraints imposed by a device-implemented application. It is thus possible to distinguish service-level-related illicit communication from control-application-related illicit communication.

Service-level-related illicit communication concerns malformed messages, especially those which are frequently sent, in which the errors are detected in message decoding stages. Any digital/serial communication is defined by a specification describing how digital messages are to be encoded and decoded. In general, network-connected devices run on protocol stacks which know the protocol specification and which can encode and decode protocol messages. Any error in the encoding of the message will be detected by the corresponding message decoding functions on the receiver side. Thus, the protocol stacks can differentiate between valid and invalid messages. Potential errors include, for example, invalid checksums, invalid message length, invalid information at certain points in the message, and so on. Such awareness of constraints imposed by the industrial network protocol may therefore be used by the illicit communication detection functionality to detect illicit communications.

Control-application-related illicit communication involves correctly formatted messages with invalid content, for example invalid setpoints, values exceeding respective ranges, values being invalid in relation to the current status of the application, invalid control attempts (such as those using out-of-range set points), and so on. In one example, the attacker 104 has knowledge of the protocol specification enabling the attacker 104 to create valid messages. However, the attacker 104 has no knowledge of the application that uses the protocol, and therefore does not know the semantic meaning or functions conveyed by the message, because this is application specific. For example, the message may be designed to use an enumerated value (1,2,3) in a specific position of the message. The attacker 104 may try sending the message with arbitrary content in which the value sent in the aforementioned position exceeds the enumerated range. At the application level, such application-related anomalies or invalid values for the application can be detected. In this way, beyond the service-level-related illicit communication detection, awareness of the control-application-related constraints may be used by the illicit communication detection functionality to perform application-specific illicit communication detection. Since any values exchanged by means of protocol messages are likely to be used by a control-relevant application, the application itself can be enabled to detect invalid values. Thus, in one example, the application itself forms part or all of the illicit communication detection functionality. In other example, constraints imposed by the application may be used by the illicit communication detection functionality to detect invalid messages independently of the application. In other examples, the illicit communication detection functionality may cooperate with the application to detect such invalid messages.

Example criteria for defining illicit communications may therefore include frequent method calls, frequent authorization calls, frequent authentication fails, unusual client behavior such as variable access etc, references to unsupported or impermissible network infrastructure components, out-of-range or otherwise invalid set points, values exceeding respective ranges, values being invalid in relation to the current status of an application, invalid checksums, invalid message length, invalid information at certain points in the message, and so on. "Frequent" may refer here to a frequency above a predetermined threshold, for example, and/or to an upper threshold on the number of communication attempts. "Frequent" may relate to the number of communication attempts exceeding a limit by a predetermined margin or order of magnitude. Further rules may relate to the repeated transmission of small errors, e.g. errors exceeding or falling short of a respective threshold by less than a predetermined margin. Further examples will be apparent to the person skilled in the art. Using such rules, the logic or algorithm may be fairly simple, being for example much smaller than a complete firewall built into the firmware of the device 100.

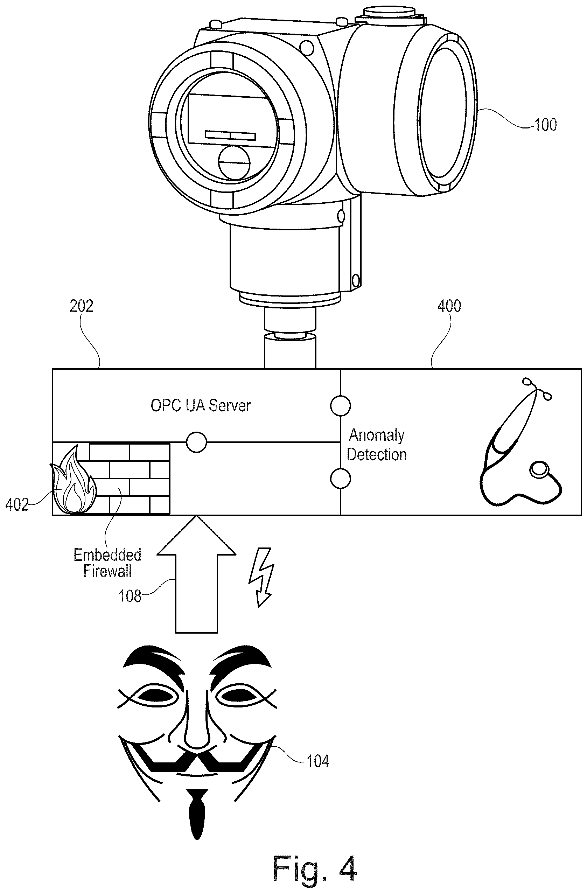

Figure 4 illustrates one implementation in which the device 100 comprises an embedded or built-in firewall 402, so that the device 100 can be installed outside a secured network. The device 100 comprises OPC UA-aware illicit communication detection functionality 400, as described above. The OPC UA server 202 may operate according to the information model 300 depicted in figure 3. To reduce the implementation effort, reuse of elements of the firewall 402 may be enabled by source code or pre-compiled libraries. A modular approach may be taken in the inner circuitry of the electronics of the device 100.

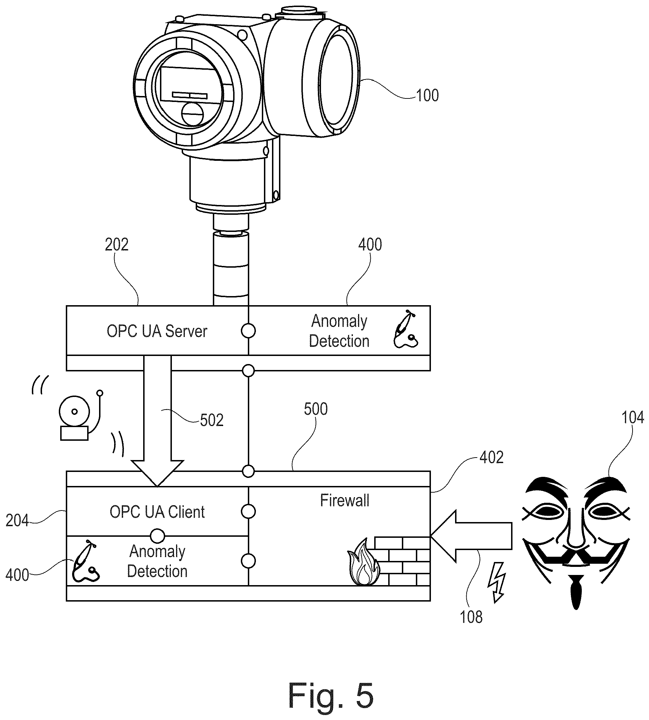

Figure 5 illustrates one implementation using a modular firewall approach, or a modular distributed firewall. The modular firewall approach shown in figure 5 differs from the system-controlled firewall approach described with reference to figure 2 via the inclusion of a box or firewall module 500 that implements the firewall 402 alongside the OPC UA-aware illicit communication detection functionality 400 and an OPC UA client 204 that monitors intrusion alarms 502 sent by the OPC UA server 202 embedded in the device 100. The information model 300 described with reference to figure 3 applies also to this implementation. The device 100 may also implement illicit communication detection functionality 400. The workflow or sequence of events 108-112 described in relation to figure 2 applies also to this implementation, with the difference being that the DCS 200 is not involved in the workflow. The modular firewall approach allows OPC UA specific network-protection to be added to a standard network. The discovery of the OPC UA server 202 of the device 100, which is performed by the OPC UA client 204 of the firewall module 500, can be performed using standardized OPC UA discovery mechanisms such as LDS or LDS-ME.

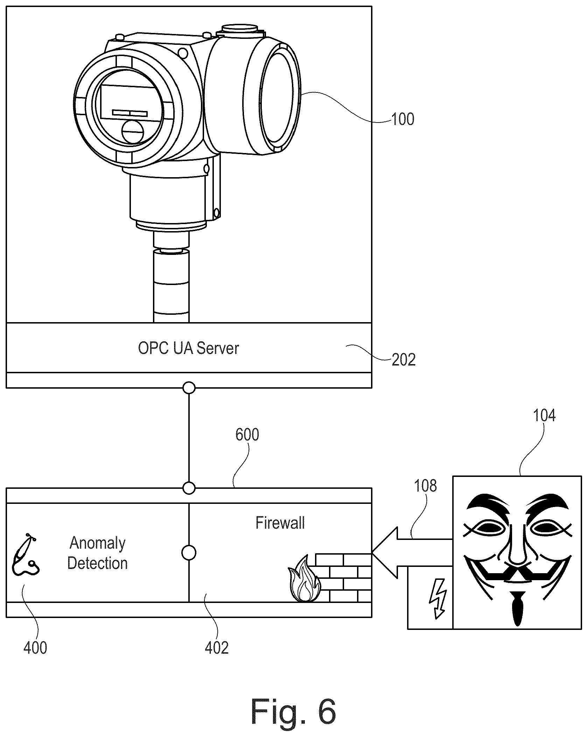

Figure 6 shows a further implementation involving an OPC UA-aware firewall module 600 in which the OPC UA-aware illicit communication detection functionality 400 is implemented only in the firewall module 600. Thus, illicit communication detection is provided only at the OPC UA service level. This approach may require OPC UA-specific protocol knowledge (e.g. Deep Packet Inspection) to be implemented in the firewall 402. Although the firewall module 600 in this approach will be unable to detect illicit communications originating from inside the network, the OPC UA-aware firewall 402 may be used to defend existing OPC UA devices 100, i.e. devices operating without the extensions 302 to the information model 300 shown in figure 3.

The implementations decribed above in relation to figures 2-6 thus leverage existing network protection mechanisms while adding OPC UA awareness on top. Although figures 2-6 are described in relation to OPC UA-aware illicit communication detection functionality, it will be understood that the implementations are extensible towards control-application-specific illicit communication detection, as described above. In figures 2-6, the defender may be viewed as that component which includes firewall functionality.

Thus provided is a technical system in which the device 100 can detect illicit communications because of its internal protocol- or application-knowledge-based deep packet inspection. Known firewalls do not perform deep packet inspection and cannot inspect application-specific content. Once the device 100 detects the attack, it calls for help which is then provided by the defender 102 that can lockout the attacker 104 by reconfiguring a firewall. In one implemention, a central firewall and defender are used to protect the entire automation system. In another implementation, for each device there is an individual module with the firewall and defender inside. In yet another implementation, the defender and firewall are embedded in the device. In the latter two cases, remote devices (which are connected to the network via e.g. WAN) may additionally be protected.

The present disclosure provides for increased reliability of the automation system because the installation is made more robust against external attacks. The solutions described herein can reduce the impact on production caused by remote attacks. While the system becomes internally hardened, it may be less risky to allow remote services from authenticated providers.

Although in some implementations the defender is shown as being a separate component to the device, it will be understood that the defender may form part of the device, or may be distributed among multiple devices or other network components. Known devices do not have the capability to reconfigure firewalls nor do they report detected communication anomalies. Similarly, the firewall may form part of the illicit communication detection functionality.

Although the implementations relate to the detection of illicit communications, the detection functionality may be configured using a set of appropriately-defined rules to detect persistent or otherwise actionable EMC issues, additionally or alternatively to the illicit communication detection.

Although the above implementations have been described in relation to OPC UA, it will be appreciated that the invention is not so limited and that alternative protocols are envisaged by the present disclosure.

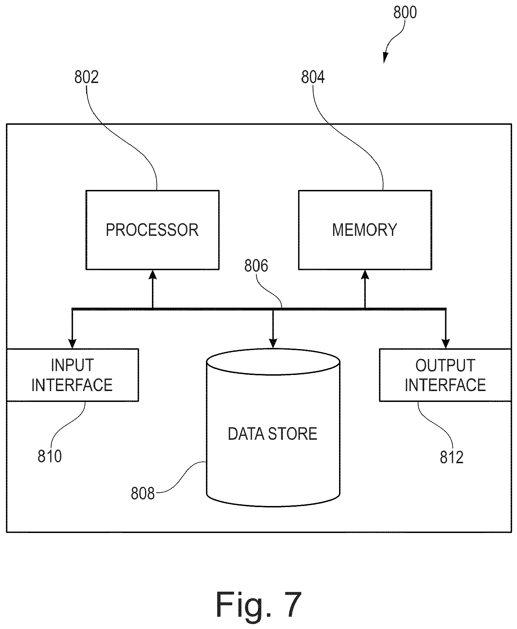

Referring now to figure 7, a high-level illustration of an exemplary computing device 800 that can be used in accordance with the systems and methodologies disclosed herein is illustrated. The computing device 800 includes at least one processor 802 that executes instructions that are stored in a memory 804. The instructions may be, for instance, instructions for implementing functionality described as being carried out by one or more components discussed above or instructions for implementing one or more of the methods described above. The processor 802 may access the memory 804 by way of a system bus 806. In addition to storing executable instructions, the memory 804 may also store conversational inputs, scores assigned to the conversational inputs, etc.

The computing device 800 additionally includes a data storage 808 that is accessible by the processor 802 by way of the system bus 806. The data storage 808 may include executable instructions, log data, etc.

The computing device 800 also includes an input interface 810 that allows external devices to communicate with the computing device 800. For instance, the input interface 810 may be used to receive instructions from an external computer device, from a user, etc. The computing device 800 also includes an output interface 812 that interfaces the computing device 800 with one or more external devices. For example, the computing device 800 may display text, images, etc. by way of the output interface 812. It is contemplated that the external devices that communicate with the computing device 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 800 may be a distributed system. Thus, for instance, several devices may be in communication by way of a network connection and may collectively perform tasks described as being performed by the computing device 800.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

It will be appreciated that the aforementioned circuitry may have other functions in addition to the mentioned functions, and that these functions may be performed by the same circuit.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

While the invention has been illustrated and described in detail in the drawings and foregoing description, such illustration and description are to be considered exemplary and not restrictive. The invention is not limited to the disclosed embodiments.

Other variations to the disclosed embodiments can be understood and effected by those skilled in the art, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used advantageously. A computer program may be stored/distributed on a suitable medium, such as an optical storage medium or a solid-state medium supplied together with or as part of other hardware, but may also be distributed in other forms, such as via the internet or other wired or wireless communications systems. Any reference signs in the claims should not be construed as limiting the scope.

## Claims

1. A computer-implemented method of defending a communications network (106) of an industrial automation system against attack by an attacker (104), the method comprising:
detecting (108) illicit communications sent from the attacker (104) to an automation device (100) connected to the communications network (106), wherein the detection is performed by illicit communication detection functionality (400) configured to detect the illicit communications using one or more predetermined rules defining illicit communications based on context awareness; and
in response to detecting the illicit communications, implementing (110, 112) countermeasures to counter the attack.

2. The method of claim 1, wherein the rules defining illicit communications comprise rules specifying one or more of the following: a maximum frequency or number of malformed messages; a maximum allowable frequency or number of method calls; a maximum allowable frequency or number of authorization calls; a maximum allowable frequency or number of authentication fails; client behavior such as variable access classified as illicit; references to unsupported or impermissible network infrastructure components; use of out-of-range or otherwise invalid set points, values exceeding respective ranges, values being invalid in relation to the current status of an application, invalid checksums, invalid message length, invalid information at certain points in a message, rules relating to the repeated transmission of small errors.

3. The method of claim 1 or 2, wherein implementing countermeasures comprises disabling (112) the illicit communications (108) originating from the attacker 104.

4. The method of claim 3, wherein the disabling (112) is performed by a defender (102) connected to the communications network (106).

5. The method of any preceding claim, wherein the disabling (112) is performed by a firewall (402).

6. The method of claim 5, wherein the firewall (402) is a system-controlled firewall.

7. The method of claim 5, wherein the firewall (402) is embedded in the device (100).

8. The method of claim 5, wherein the firewall (402) is implemented by a firewall module (500; 600) connected to the communications network (106).

9. The method of any preceding claim, wherein implementing countermeasures comprises reporting (110) the detected illicit communications to a network component (102; 402) configured to disable (112) the illicit communications (108) originating from an attacker 104.

10. The method of claim 9, wherein the reporting (110) comprises reporting the detected illicit communications using a protocol-defined alarm message.

11. The method of claim 10, wherein the message comprises an OPC UA-specified event notification.

12. The method of any preceding claim, wherein the one or more predetermined rules defining illicit communications form part of an information model (300) defining acknowledgeable condition types.

13. The method of any preceding claim, wherein implementing countermeasures comprises determining one or more of an IP address (308) and a MAC address (310) of the attacker (104).

14. A computing device (100; 102; 500; 600; 800) comprising a processor (802) configured to perform the method of any of claims 1-13.

15. A computer-readable medium (804, 808) comprising instructions which, when executed by a computing device (100; 102; 500; 600; 800), cause the computing device to carry out the method of any of claims 1-13.
